# EUROPÄISCHE PATENTSCHRIFT

(11) **EP 3 292 276 B1**
(45) Veröffentlichungstag und Bekanntmachung des Hinweises auf die Patenterteilung: **25.09.2019**
(21) Anmeldenummer: 16709036.4
(22) Anmeldetag: 09.03.2016
(51) Int. Cl.: F01C 9/00, F01C 21/00, F01C 21/18

(54) **SCHWENKKOLBENMASCHINE**
OSCILLATING PISTON MACHINE
MACHINE À PISTONS OSCILLANTS

(30) Priorität: 13.03.2015 DE 102015103734
(43) Veröffentlichungstag der Anmeldung: 14.03.2018
(73) Patentinhaber: Innowatt GmbH, 79585 Steinen (DE)
(72) Erfinder: HÜTTLIN, Herbert, 79585 Steinen (DE)
(74) Vertreter: Witte, Weller & Partner Patentanwälte mbB
(86) Internationale Anmeldenummer: PCT/EP2016/055014
(87) Internationale Veröffentlichungsnummer: WO 2016/146450

(56) Entgegenhaltungen:
- DE-A1-102007 039 309
- DE-A1-102007 054 321

## Beschreibung

Die Erfindung betrifft eine Schwenkkolbenmaschine, mit einem Gehäuse, in dem ein erster Kolben und ein zweiter Kolben angeordnet sind, die um eine Schwenkachse voneinander weg und aufeinander zu verschwenkbar sind, wobei der erste Kolben eine erste Endfläche und der zweite Kolben eine zweite Endfläche aufweist, wobei zwischen der ersten Endfläche und der zweiten Endfläche eine Arbeitskammer für ein Arbeitsmedium angeordnet ist, die sich beim Verschwenken des ersten Kolbens und des zweiten Kolbens abwechselnd verkleinert und vergrößert, wobei in die Arbeitskammer ein Einlass zum Einlassen von Arbeitsmedium in die Arbeitskammer und ein Auslass zum Auslassen von Arbeitsmedium aus der Arbeitskammer mündet, und mit einem Schließglied zum Verschließen und Freigeben zumindest des Einlasses oder zumindest des Auslasses, wobei das Schließglied einen Ventilteller aufweist, der mit einem Ventilsitz zusammenwirkt.

Eine solche Schwenkkolbenmaschine ist aus DE 10 2007 039 309 A1 bekannt.

Eine Schwenkkolbenmaschine gemäß der vorliegenden Erfindung kann als reiner Verbrennungsmotor, oder als Verbrennungsmotor kombiniert mit elektromotorischem Teil (als Generator oder als Hybridmotor), und/oder auch als Kompressor ausgebildet sein.

Eine Schwenkkolbenmaschine unterscheidet sich von klassischen Hubkolbenmaschinen dadurch, dass die Kolben anstatt einer linearen Hubbewegung Schwenkbewegungen um eine Schwenkachse ausführen. Dies ermöglicht es, die gesamte Schwenkkolbenmaschine mit einem kugelförmigen Gehäuse auszubilden, wie dies auch bei der aus dem oben genannten Dokument bekannten Schwenkkolbenmaschine realisiert ist. Bei der eingangs genannten bekannten Schwenkkolbenmaschine werden die Schwenkbewegungen der Kolben aus deren Umlaufbewegung um die Drehachse abgeleitet.

Im Falle der Verwendung einer solchen Schwenkkolbenmaschine als Verbrennungsmotor werden die einzelnen Arbeitstakte des Einlassens, Verdichtens, Expandierens und Ausstoßens durch hin- und hergehende Bewegungen zumindest zweier Kolben zwischen zwei Endstellungen, der sogenannten UT (unterer Totpunkt)- und OT (oberer Totpunkt)-Stellung, vermittelt.

Im Falle der Verwendung einer Schwenkkolbenmaschine als Kompressor ist die Arbeitsweise ähnlich, wobei jedoch in der Schwenkkolbenmaschine kein Verbrennungsvorgang und entsprechend keine Zündung eines Verbrennungsgemisches stattfindet, sondern es wird lediglich ein Gas, insbesondere Luft, hoch verdichtet.

Im Fall der Ausgestaltung einer Schwenkkolbenmaschine als Generator stellt sich diese als Kombination aus einem Verbrennungsmotor mit einem elektromotorischen Teil dar, wobei die von den Kolben verrichtete Arbeit zum Antreiben des elektromotorischen Teils und damit zur Erzeugung von elektrischer Energie genutzt wird. Dabei ist der elektromotorische Teil ebenfalls in dem Gehäuse der Schwenkkolbenmaschine untergebracht, wie beispielsweise in dem Dokument WO 2011/147492 A2 beschrieben ist. Mit einem ähnlichen Aufbau wie bei einem Generator kann die Schwenkkolbenmaschine auch als Hybridmotor verwendet werden, wie ebenfalls in dem Dokument WO 2011/147492 A2 beschrieben ist.

Unabhängig von der Funktion der Schwenkkolbenmaschine als reiner Verbrennungsmotor, als Kompressor, als Generator oder als Hybridmotor ist zwischen zumindest jeweils zwei Kolben eine Arbeitskammer vorhanden, in die ein Arbeitsmedium in periodischer Folge eingelassen und aus ihr wieder ausgelassen bzw. ausgestoßen wird. Entsprechend ist der Arbeitskammer ein Einlass zum Einlassen von Arbeitsmedium in die Arbeitskammer und ein Auslass zum Auslassen von Arbeitsmedium aus der Arbeitskammer zugeordnet, die jeweils in die Arbeitskammer münden.

Bei der aus dem eingangs genannten Dokument bekannten Schwenkkolbenmaschine besitzen der Einlass und der Auslass eine gemeinsame Mündung in die Arbeitskammer, die sich am äußeren Rand der Arbeitskammer befindet. Diese Mündung ist in Bezug auf die geometrische Drehachse, um die die Kolben in Überlagerung zu ihrer Schwenkbewegung umlaufen, an einer Stirnseite des Gehäuses, d.h. auf der Drehachse und senkrecht zu dieser angeordnet. Zum Verschließen und Freigeben der Mündung ist ein Schließglied vorhanden, das in der Form eines klassischen Tulpenventils ausgebildet ist und entsprechend einen Ventilteller aufweist, der mit einem Ventilsitz am Rand der Mündung zusammenwirkt. Bei ihren Schwenkbewegungen bewegen sich die Kolben, in Bezug auf die Schwenkachse gesehen, radial innerhalb der Mündung und damit des Ventiltellers aufeinander zu, wie in Fig. 3 in DE 10 2007 039 309 A1 gezeigt ist. Die Steuerung des Öffnens und Schließens des Schließgliedes wird dabei mittels eines Steuerantriebs aus der Umlaufbewegung der Kolben um die Drehachse abgeleitet.

Als Nachteil dieser Schwenkkolbenmaschine könnte es angesehen werden, dass der Einlass und der Auslass für das Arbeitsmedium in bzw. aus der Arbeitskammer über eine gemeinsame Mündung erfolgt, in der das vorstehend erwähnte Schließglied angeordnet ist. Hierdurch sind Überschneidungen, d.h. zeitlich überlappende gleichzeitige Freigaben des Auslasses und des Einlasses, wie sie in heutigen Motorsteuerungen vorgesehen sind und sich als vorteilhaft erwiesen haben, nicht möglich.

Die aus dem oben genannten Dokument WO 2011/147492 A2 bekannte Schwenkkolbenmaschine weist eine ventillose, drehschieberähnliche Steuerung des Einlasses von Arbeitsmedium in die Arbeitskammer und des Auslasses von Arbeitsmedium aus der Arbeitskammer auf. Dies ist dadurch realisiert, dass die Kolben in einem Kolbenkäfig angeordnet sind, der stirnseitig eine Gaswechselöffnung aufweist, die beim gemeinsamen Umlaufen mit den Kolben abwechselnd mit einer Einlassöffnung und einer Auslassöffnung in einem Stirnteil des Gehäuses kommuniziert. An dieser Ausgestaltung könnte es als nachteilig angesehen werden, dass die Öffnungs- und Schließzeiten von Frischgas-Einlass und Abgas-Auslass nicht last- und/oder drehzahlabhängig eingestellt werden können. Für den Betrieb der Schwenkkolbenmaschine mit konstanten Drehzahlen, wie dies beispielsweise bei einer Verwendung als Generator der Fall ist, ist eine drehzahlabhängige Verstellung der Gaswechselsteuerung auch nicht erforderlich.

Es lässt sich somit feststellen, dass die bekannten Schwenkkolbenmaschinen, auch aufgrund ihrer Kompaktheit, für viele Einsatzzwecke gut geeignet sind, hinsichtlich der Ausgestaltung ihrer Gaswechselsteuerung noch verbesserungsfähig sind.

Vor diesem Hintergrund liegt der Erfindung die Aufgabe zugrunde, eine Schwenckolbenmaschine der eingangs genannten Art mit einer verbesserten Gaswechselsteuerung bereitzustellen.

Erfindungsgemäß wird diese Aufgabe hinsichtlich der eingangs genannten Schwenckolbenmaschine dadurch gelöst, dass eine Mündung zumindest des Einlasses oder zumindest des Auslasses in der Arbeitskammer zwischen der ersten Endfläche des ersten Kolbens und der zweiten Endfläche des zweiten Kolbens angeordnet ist, und dass der Ventilsitz und der Ventilteller an der Mündung angeordnet sind.

Bei der erfindungsgemäßen Schwenkkolbenmaschine befindet sich die Mündung zumindest des Einlasses oder zumindest des Auslasses im Unterschied zu der eingangs genannten bekannten Schwenkkolbenmaschine somit innerhalb der Arbeitskammer zwischen den beiden Endflächen der beiden Kolben, d.h. in der OT-Stellung der Kolben innerhalb der Umfangsränder der Endflächen der Kolben. Die Verlegung der Mündung vom äußeren Rand der Arbeitskammer wie im Stand der Technik in die Arbeitskammer hinein bietet gleich mehrere strömungstechnische Vorteile, insbesondere eine schnellere und gleichmäßigere Befüllung der Arbeitskammer und/oder eine schnellere Entleerung der Arbeitskammer. Wenn die Mündung zumindest des Einlasses in der Arbeitskammer angeordnet ist, kann sich eingelassenes Arbeitsmedium, beispielsweise Frischluft, in der Arbeitskammer gleichmäßiger verteilen, d.h. das Arbeitsmedium kann in allen Richtungen mit etwa gleichen Strecken in die Arbeitskammer eintreten. Es gibt daher keine ungleich langen Wegstrecken für das in die Arbeitskammer eintretende Arbeitsmedium, wie dies bei der bekannten Schwenkkolbenmaschine der Fall ist.

Außerdem ermöglicht es die erfindungsgemäße Ausgestaltung, eine separate Mündung für den Einlass und eine separate Mündung für den Auslass in der Arbeitskammer zwischen den beiden Endflächen der beiden Kolben vorzusehen, wie dies bei einer bevorzugten Ausgestaltung der Erfindung, die später noch beschrieben wird, vorgesehen ist. Die erfindungsgemäße Schwenkkolbenmaschine ermöglicht es somit, ohne erhöhten konstruktiven Aufwand eine Gaswechselsteuerung mit zeitlichen Überschneidungen des Ein- und Auslassens zu implementieren.

Die Mündung zumindest des Einlasses oder zumindest des Auslasses kann durch die Erfindung auch hinreichend groß ausgestaltet sein, so dass sich bei geöffnetem Ventilteller ein großumfänglicher Ringspalt ergibt, was sich positiv auf den Gaswechsel auswirkt.

In einer bevorzugten Ausgestaltung erstreckt sich der Ventilteller parallel zu einer Schwenkebene des ersten und zweiten Kolbens.

In dieser Ausgestaltung ergibt sich nicht nur der Vorteil, dass die Mündung großkalibrig gestaltet werden kann, sondern auch der Vorteil, dass den Endflächen der Kolben eine konkave, sogar halbkugelschalenförmige Form gegeben werden kann, so dass sich die Arbeitskammer beim Auseinanderschwenken der Kolben hohlkugelförmig vergrößert. Dies wiederum hat den Vorteil einer besonders gleichmäßigen Verteilung des eingelassenen Arbeitsmediums in der Arbeitskammer beim Einlassen (Ansaugen).

Weiterhin ist es bevorzugt, wenn der Ventilteller zum Verschließen und Freigeben der Mündung parallel zur Schwenkachse beweglich ist.

Hierbei ist von Vorteil, dass der Ventilteller mit einem Ventilantriebsschaft versehen sein kann, ohne dass dieser mit den verschwenkbaren Kolben kollidiert.

In einer weiteren bevorzugten Ausgestaltung ist eine jeweilige Kontur der ersten und der zweiten Endfläche an eine Außenkontur eines Umfangsrandes des Ventiltellers angepasst, so dass die erste und/oder die zweite Endfläche den Ventilteller formpassend umschließen, wenn die Arbeitskammer ihr minimales Volumen aufweist.

In dieser Ausgestaltung sind die Endflächen der Kolben optimal an den Ventilteller angepasst. In der OT-Stellung der Kolben können diese vorzugsweise einen Abstand von 0,5 mm vom Umfangsrand des Ventiltellers einnehmen.

In einer weiteren bevorzugten Ausgestaltung sind der erste Kolben und der zweite Kolben in einem in dem Gehäuse angeordneten Kolbenkäfig angeordnet, wobei der Kolbenkäfig einen außenseitig konvex gewölbten glockenförmigen Abschnitt aufweist, dessen arbeitskammerseitige Öffnung die Mündung des Einlasses oder des Auslasses bildet.

Der glockenförmige Abschnitt ragt dabei in die Arbeitskammer, d.h. in den Raum zwischen den beiden Endflächen der beiden Kolben hinein und dient der Aufnahme des Ventiltellers. Durch den glockenförmigen Abschnitt verläuft der Einlasskanal oder der Auslasskanal. Insbesondere wenn der glockenförmige Abschnitt wie vorzugsweise vorgesehen einstückig mit dem Kolbenkäfig ausgebildet ist, sind keine Abdichtungsmaßnahmen am Kolbenkäfig erforderlich, wodurch der konstruktive Aufwand gering gehalten wird. Für die Abdichtung der Arbeitskammer gegen den Innenraum des glockenförmigen Abschnitts sorgt dann allein der Ventilteller im Zusammenwirken mit dem Ventilsitz an der Mündung des glockenförmigen Abschnitts, wenn das Schließglied geschlossen ist.

Unter "glockenförmiger Abschnitt" ist zu verstehen, dass die Außenkontur dieses Abschnitts sich mit konvexer Wölbung zur arbeitskammerseitigen Öffnung hin erweitert. Die Außenkontur kann dabei im Wesentlichen halbkugelförmig sein.

Im Zusammenhang mit der vorstehend genannten Maßnahme ist es weiterhin bevorzugt, wenn die erste Endfläche und die zweite Endfläche konkav gewölbt und an eine Außenkontur des glockenförmigen Fortsatzes angepasst sind, so dass die erste und die zweite Endfläche den glockenförmigen Fortsatz formpassend umschließen, wenn die Arbeitskammer ihr minimales Volumen aufweist.

Diese Maßnahme ist besonders vorteilhaft, da den Endflächen in Anpassung an die Form des glockenförmigen Abschnitts eine Hohlform, insbesondere die Form jeweils einer halben Hohlkugel gegeben werden kann. Zusammen ergeben die beiden Endflächen der Kolben dann eine Arbeitskammer, die sich ausgehend von der OT-Stellung beim Auseinanderschwenken der Kolben hohlkugelförmig öffnet. Dies ergibt eine strömungstechnisch günstige gleichmäßige Ausbreitung des Arbeitsmediums beim Einlassen und beim Expandieren, sowie eine rasche und vollständige Entleerung beim Auslassen.

Der glockenförmige Abschnitt des Kolbenkäfigs kann mit Kühlmediumkanälen in seiner Wandung versehen sein, die den glockenförmigen Abschnitt in der Arbeitskammer zu kühlen.

In einer weiteren bevorzugten Ausgestaltung ist die Mündung eine erste Mündung des Einlasses, das Schließglied ein erstes Schließglied zum Verschließen und Freigeben der ersten Mündung, der Ventilteller ein erster Ventilteller und der Ventilsitz ein erster Ventilsitz, und es ist ein zweites Schließglied zum Verschließen und Freigeben einer zweiten Mündung des Auslasses vorhanden, die zwischen der ersten Endfläche und der zweiten Endfläche angeordnet ist, wobei das zweite Schließglied einen zweiten Ventilteller aufweist, der mit einem zweiten Ventilsitz an der zweiten Mündung zusammenwirkt, wobei der zweite Ventilteller dem ersten Ventilteller gegenüberliegend angeordnet ist.

Diese Ausgestaltung ist besonders vorteilhaft, weil der Einlass und der Auslass separate Mündungen in der Arbeitskammer aufweisen, die durch zwei separate Schließglieder unabhängig voneinander verschlossen bzw. freigegeben werden können. Hierdurch sind insbesondere zeitliche Überschneidungen beim Freigeben sowohl des Einlasses als auch des Auslasses möglich, wie bei modernen Motorsteuerungen vorgesehen und gefordert ist.

Im Zusammenhang mit der vorstehend genannten Ausgestaltung sind der erste Ventilteller und der zweite Ventilteller in ihrer beiderseitigen Schließstellung symmetrisch bezüglich einer geometrischen Achse, die mittig durch die Arbeitskammer und senkrecht zur Schwenkachse verläuft, voneinander beabstandet angeordnet.

In der beiderseitigen Schließstellung der beiden Schließglieder für Einlass und Auslass und in der OT-Stellung der beiden Kolben ist die Arbeitskammer somit durch den Raum zwischen den beiden Ventiltellern gegeben. Beim Freigeben des Einlasses entsteht, wie bereits oben beschrieben wurde, ein Ringspalt, durch den Frischgas zentral-umfänglich und gleichmäßig verteilt in die Arbeitskammer einströmt, während die Kolben von der OTin die UT-Stellung verschwenken. Beim späteren Expandieren, nachdem die Kolben erneut in die OT-Stellung verschwenkt sind, kann sich das gezündete Gemisch ebenfalls gleichmäßig in alle Richtungen ausdehnen. Insbesondere in Verbindung mit der konkaven Ausgestaltung der Endflächen der beiden Kolben entsteht so ein Brennraum, in dem sich das Verbrennungsgemisch optimal hohlkugelförmig ausbreiten kann. Aber auch beim Ausstoßen des verbrannten Gemisches ergeben sich die gleichen Vorteile einer schnellen Abführung des Abgases durch den Auslass nach Öffnen des Schließgliedes am Auslass.

In Verbindung mit der konkaven Wölbung der beiden Endflächen der beiden Kolben wird eine sich hohlkugelförmig öffnende Arbeitskammer geschaffen, die nach dem Zünden des Luft-Brennstoff-Gemisches eine ideale Expansionskammer darstellt.

Vorzugsweise beträgt ein Abstand des ersten Ventiltellers von dem zweiten Ventilteller in der beiderseitigen Schließstellung weniger als etwa 1 cm, vorzugsweise weniger als etwa 0,8 cm, weiter vorzugsweise etwa 0,5 cm oder darunter.

Wie bereits oben erwähnt, ist das minimale Volumen der Arbeitskammer in der OT-Stellung der beiden Kolben durch den Raum zwischen den beiden gegenüberliegenden in Ventiltellern gebildet. Ein Abstand der beiden Ventilteller in dem vorstehend genannten Bereich ist für ein günstiges Verdichtungsverhältnis vor der Zündung ausreichend.

In einer weiteren bevorzugten Ausgestaltung ist in dem Gehäuse ein ringförmiges Kurvenglied angeordnet, das eine Steuerkurve aufweist, wobei das Kurvenglied in dem Gehäuse um eine Drehachse umlaufen kann, die senkrecht zur Schwenkachse verläuft, wobei der erste Kolben und der zweite Kolben jeweils ein Lauforgan aufweisen, die entlang der Steuerkurve geführt sind, um die Schwenkbewegung des ersten und zweiten Kolbens aus der Umlaufbewegung des Kurvengliedes abzuleiten.

Diese Maßnahme, die an sich bei der Schwenkkolbenmaschine gemäß WO 2011/147492 A2 bereits bekannt ist, hat im Zusammenhang mit der erfindungsgemäßen Ausgestaltung der Schwenkkolbenmaschine den Vorteil, dass die Schließglieder, die erfindungsgemäß zwischen den Endflächen der Kolben in der Arbeitskammer angeordnet sind, nicht einer Rotationsbewegung unterzogen werden müssen. Hierdurch wird der konstruktive Aufwand der erfindungsgemäßen Schwenkkolbenmaschine deutlich reduziert. Für das drehbare Kurvenglied sind kostengünstige Drehlager ausreichend. Auch die Kolben und der oben genannte Kolbenkäfig sind bei dieser Ausgestaltung nicht-rotierend in dem Gehäuse aufgenommen, was den Vorteil hat, dass auf diese Teile keine Fliehkräfte wirken.

Des Weiteren ist vorzugsweise eine Ventilsteuerung zum Steuern des Schließgliedes vorhanden, die als Nockensteuerung mit einem drehbaren Nocken ausgebildet ist, der mit einem mit dem Ventilteller verbundenen Stößel zusammenwirkt, wobei der Nocken von dem Kurvenglied angetrieben wird.

Das Kurvenglied vereint somit vorteilhafterweise zwei Funktionen in sich, nämlich einerseits die Schwenkbewegung der Kolben zu vermitteln, und zum anderen in Synchronisation mit der Umlaufdrehzahl des Kurvengliedes das oder die Schließglieder für den Gaswechsel zu steuern.

In einer konstruktiv einfachen Ausgestaltung dieser Maßnahme weist das Kurvenglied hierzu einen mit einer ersten Verzahnung versehenen Zahnring auf, und der Nocken weist ein mit einer zweiten Verzahnung versehenes Zahnrad auf, wobei die erste Verzahnung mit der zweiten Verzahnung kämmend in Eingriff steht.

Die erste Verzahnung kann dabei im wesentlichen als Längsverzahnung und die zweite Verzahnung im Wesentlichen als Querverzahnung ausgebildet sein. Damit bei einer Umdrehung des Kurvengliedes um 360° um die Drehachse der Nocken sich ebenfalls um 360° dreht, ist die Zahl der Zähne der ersten Verzahnung gleich der Zahl der Zähne der zweiten Verzahnung.

Vorzugsweise ist die Ventilsteuerung verstellbar, um einen Schließzeitpunkt und/oder Freigabezeitpunkt und/oder einen Hub des Schließgliedes last- und/oder drehzahlabhängig einzustellen.

Diese Ausgestaltung trägt der Forderung einer last- und/oder drehzahlabhängigen Einstellung der Einlass- und Auslasszeitpunkte Rechnung, und ermöglicht auch Überschneidungen der Freigabe des Einlasses und des Auslasses, was erst durch die vorliegende Erfindung realisierbar ist.

In einer konstruktiv einfachen Ausgestaltung ist hierzu eine Winkellage des Nockens relativ zu dem Zahnrad verstellbar.

Die Verstellung des Nockens relativ zu dem Zahnrad kann durch eine elektrische Aktuatorik realisiert sein, oder rein mechanisch durch ein Spiel zwischen dem Nocken und dem Zahnrad, das last- und drehzahlabhängig eine Verstellung der Winkellage des Nockens relativ zum Zahnrad bewirkt.

Alternativ zu einer Nockensteuerung des oder der Schließglieder ist auch eine rein elektrisch-elektronische Steuerung des oder der Schließglieder möglich.

In einer weiteren bevorzugten Ausgestaltung ist in dem Gehäuse ein dritter Kolben mit einer dritten Endfläche und ein vierter Kolben mit einer vierten Endfläche angeordnet, die zwischen sich eine zweite Arbeitskammer für ein Arbeitsmedium bilden. Die erfindungsgemäße Schwenkkolbenmaschine weist in dieser Ausgestaltung somit vorzugsweise vier Kolben auf. Der dritte und der vierte Kolben sind dabei um die gleiche Schwenkachse verschwenkbar wie der erste und der zweite Kolben. Der erste und der dritte Kolben sind vorzugsweise starr miteinander verbunden, ebenso der zweite Kolben und der vierte Kolben, derart, dass sich die zweite Arbeitskammer im Volumen verkleinert, wenn sich die erste Arbeitskammer im Volumen vergrößert, und umgekehrt.

In dieser Ausgestaltung können in beiden Arbeitskammern jeweils ein Verbrennungszyklus stattfinden. Ebenso ist es jedoch möglich und vorteilhaft, wenn die eine Arbeitskammer als Brennraum für die Arbeitstakte eines Verbrennungszyklus genutzt wird, während die andere Arbeitskammer als Kompressor genutzt wird. In diesem Fall ist die Schwenckolbenmaschine eine Kombination aus Verbrennungsmotor und Kompressor in einem gemeinsamen, vorzugsweise kugelförmigen Gehäuse.

In einer weiteren bevorzugten Ausgestaltung bildet das oben genannte Kurvenglied den Rotor eines elektromotorischen Teils, wobei der zugehörige Stator des elektromotorischen Teils gehäusefest im Gehäuse angeordnet ist. In dieser Ausgestaltung kann die erfindungsgemäße Schwenkkolbenmaschine als Generator oder als Hybridmotor verwendet werden.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel ist in der Zeichnung dargestellt und wird mit Bezug auf diese hiernach näher beschrieben. Es zeigen:
- Fig. 1: eine Schwenkkolbenmaschine in einer perspektivischen, teilweise geschnittenen hälftigen Ansicht, wobei der Schnitt entlang einer Drehachse eines Kurvengliedes der Schwenkkolbenmaschine und senkrecht zu einer Schwenkachse von Kolben der Schwenkkolbenmaschine genommen ist;
- Fig. 2: die Schwenkkolbenmaschine in Fig. 1 in einer Seitenansicht teilweise im Schnitt, wobei die Kolben ungeschnitten gezeigt sind;
- Fig. 3: die Schwenkkolbenmaschine in der gleichen Seitenansicht wie in Fig. 2, wobei jedoch die Kolben nun eine andere Schwenkstellung einnehmen;
- Fig. 4: die Schwenkkolbenmaschine in Fig.1 bis 3 in einem Schnitt entlang einer Ebene, die gegenüber der Schnittebene in Fig. 2 und 3 um 90° um die Drehachse des Kurvengliedes gedreht ist;
- Fig. 5: den verbrennungsmotorischen Teil der Schwenkkolbenmaschine in den vorhergehenden Figuren in einer perspektivischen Darstellung im aus dem Gehäuse ausgebauten Zustand;
- Fig. 6: eine Seitenansicht des Kolbenkäfigs in Fig. 5 unter Weglassung der Kolben und weiterer Elemente in Fig. 5;
- Fig. 7: den Kolbenkäfig in Fig. 5 in einem perspektivischen Schnitt entlang einer Ebene senkrecht zur Schwenkachse der Kolben;
- Fig. 8: den Kolbenkäfig in Fig. 6 in einer in zwei Hälften zerlegten Darstellung;
- Fig. 9: einen Ausschnitt der Schwenkkolbenmaschine in Fig. 1, der ein Schließglied für den Auslass und ein Schließglied für den Einlass zeigt, wobei beide Schließglieder in ihrer Schließstellung sind;
- Fig. 10: den Ausschnitt in Fig. 9, wobei das Schließglied für den Einlass geöffnet ist, während das Schließglied für den Auslass geschlossen ist;
- Fig. 11: den Ausschnitt in Fig. 9, wobei das Schließglied für den Auslass geöffnet ist, während das Schließglied für den Einlass geschlossen ist; und
- Fig. 12: den Ausschnitt in Fig. 9, wobei das Schließglied für den Einlass und das Schließglied für den Auslass teilweise geöffnet sind.

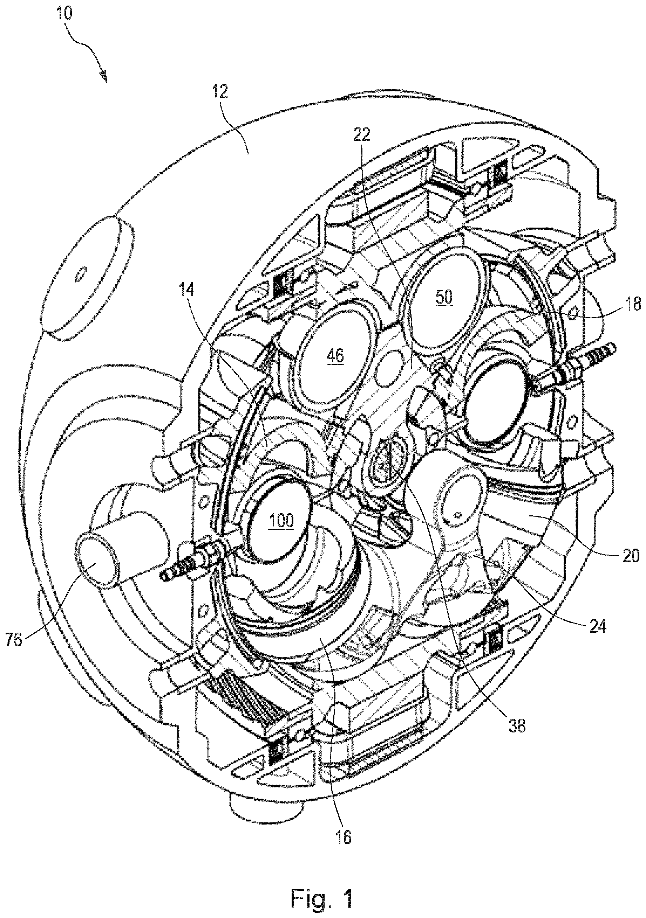

In Fig. 1 bis 4 ist eine mit dem allgemeinen Bezugszeichen 10 versehene Schwenckolbenmaschine in verschiedenen Ansichten gezeigt.

In dem vorliegenden Ausführungsbeispiel ist die Schwenkkolbenmaschine 10 zur Verwendung als Verbrennungsmotor in Kombination mit einem elektromotorischen Teil ausgebildet und kann somit als Hybridaggregat zum Antrieb eines Kraftfahrzeuges verwendet werden. Die Schwenkkolbenmaschine 10 kann in geringfügig abgewandelter Form auch als Generator oder Kompressor verwendet werden.

Mit Bezug auf Fig. 1 bis 4 wird zunächst der grundsätzliche Aufbau des Verbrennungsmotorteils der Schwenkkolbenmaschine 10 beschrieben.

Die Schwenkkolbenmaschine 10 weist ein Gehäuse 12 auf, von dem in Fig. 1 eine Hälfte gezeigt ist. Das Gehäuse 12 weist insgesamt allgemein die Form einer Kugel, die entsprechend aus zwei Kugelhälften zusammengefügt ist.

In dem Gehäuse 12 sind ein erster Kolben 14, ein zweiter Kolben 16, ein dritter Kolben 18 und ein vierter Kolben 20 angeordnet.

Die Kolben 14, 16, 18 und 20 weisen eine gekrümmt zylindrische Form auf. Im Querschnitt weisen die Kolben 14, 16, 18 und 20 eine kreisförmige Außenkontur auf.

Der erste Kolben 14 und der dritte Kolben 18 sind über einen Verbindungsabschnitt 22 starr miteinander verbunden. Ebenso sind der zweite Kolben 16 und der vierte Kolben 20 über einen Verbindungsabschnitt 24 starr miteinander verbunden.

Der erste Kolben 14 weist eine Endfläche 26, der zweite Kolben 16 eine Endfläche 28, der dritte Kolben eine Endfläche 30 und der vierte Kolben eine Endfläche 32 auf.

Zwischen der ersten Endfläche 26 des ersten Kolbens 14 und der zweiten Endfläche 28 des zweiten Kolbens 16 befindet sich eine erste Arbeitskammer 34. Zwischen der Endfläche 30 des Kolbens 18 und der Endfläche 32 des Kolbens 20 befindet sich eine zweite Arbeitskammer 36.

Die Kolben 14, 16, 18 und 20 sind um eine gemeinsame Schwenkachse 38, die als geometrische Achse zu verstehen ist, verschwenkbar. Aufgrund der starren Kopplung des Kolbens 14 und des Kolbens 18 führen diese beiden Kolben gleichsinnig gerichtete Schwenkbewegungen um die Schwenkachse 38 aus, und ebenso führen die Kolben 16 und 20 aufgrund ihrer starren Kopplung gleichsinnige Schwenkbewegungen aus. Demgegenüber führen die Kolben 14 und 16 gegensinnig gerichtete Schwenkbewegungen aus, d.h. die Kolben 14 und 16 sind aufeinander zu und voneinander weg verschwenkbar. Das Gleiche gilt für die Kolben 18 und 20.

Entsprechend der Schwenkbewegungen des Kolbens 14 und 16 aufeinander zu und voneinander weg vergrößert und verkleinert sich die Arbeitskammer 34 periodisch. Ebenso vergrößert und verkleinert sich die Arbeitskammer 36 zwischen den Endflächen 30 und 32 der Kolben 18 und 20 periodisch.

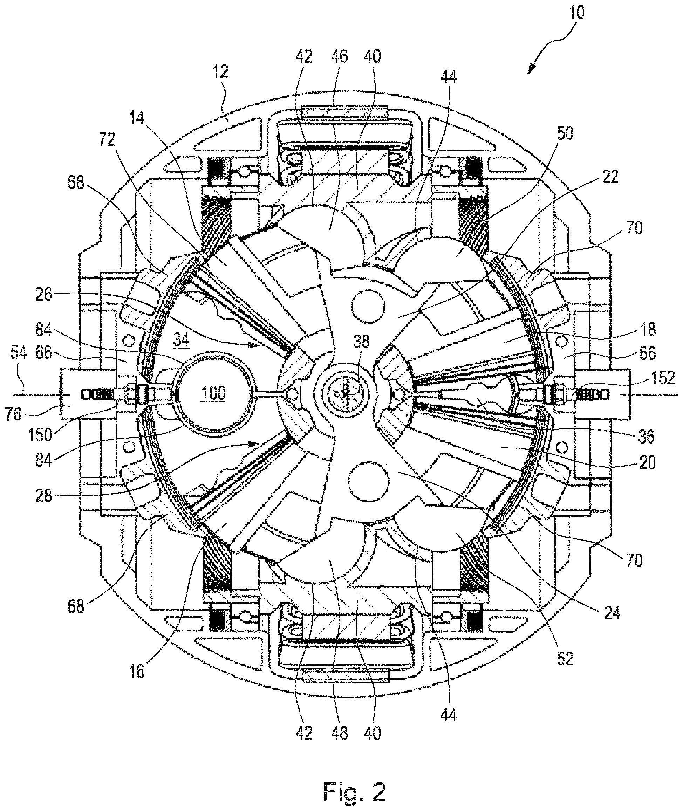

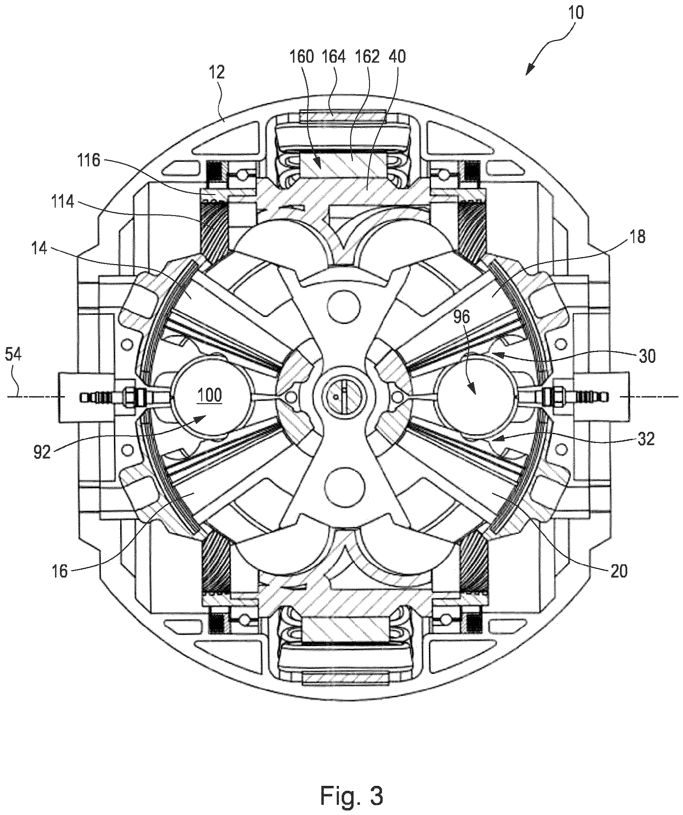

In Fig. 2 ist eine Schwenkstellung der Kolben 14 und 16 in ihrer UT-Stellung gezeigt, in der die Arbeitskammer 34 ihr maximales oder nahezu maximales Volumen aufweist, und eine Schwenkstellung der Kolben 18 und 20 in ihrer OT-Stellung, in der die Arbeitskammer 36 ihr minimales oder nahezu minimales Volumen aufweist. Die Arbeitskammern 34 und 36 vergrößern und verkleinern sich somit gegensinnig zueinander. Fig. 3 zeigt eine Schwenkstellung der Kolben 14, 16, 18, 20, in der die Arbeitskammern 34 und 36 gleich weit geöffnet sind. Ausgehend von dieser Schwenkstellung verkleinert sich die Arbeitskammer 34 und vergrößert sich die Arbeitskammer 36, bis die Arbeitskammer 36 ihr maximales Volumen und die Arbeitskammer 34 ihr minimales Volumen einnimmt. Daran schließt sich der umgekehrte Vorgang an, bis wieder der Zustand in Fig. 2 erreicht ist, usw.

Um die Schwenkbewegungen der Kolben 14, 16, 18 und 20 zu steuern, weist die Schwenkkolbenmaschine 10 in dem Gehäuse 12 ein Kurvenglied 40 auf, das eine erste Steuerkurve 42 und eine zweite Steuerkurve 44 aufweist. Das Kurvenglied 40 ist als vollumfänglicher Ring ausgebildet, und die beiden Steuerkurven 42 und 44 erstrecken sich vollumfänglich an dem Kurvenglied.

Die Kolben 14, 16, 18 und 20 weisen jeweils ein Lauforgan auf, und zwar weist der Kolben 14 ein Lauforgan 46, der Kolben 16 ein Lauforgan 48, der Kolben 18 ein Lauforgan 50 und der Kolben 20 ein Lauforgan 52 auf.

Die Lauforgane 46, 48, 50 und 52 sind entlang der Steuerkurven 42 und 44 geführt. Die Lauforgane 46, 48, 50, 52 sind als Kugeln, insbesondere Hohlkugeln, ausgebildet, die an den Rückseiten der Kolben 14, 16, 18 und 20 in allen Raumrichtungen frei drehbar gelagert sind, in der Art einer Kugel-Pfannen-Lagerung. Die Querschnittskontur der Steuerkurven 42 und 44 ist entsprechend an die kugelförmige Außenkontur der Lauforgane 46, 48, 50 und 52 angepasst.

Das Kurvenglied 40 läuft im Betrieb der Schwenkkolbenmaschine 10 um eine Drehachse 54 in dem Gehäuse 12 um. Die Steuerkurven 42 und 44 sind so ausgebildet, dass beim Umlaufen des Kurvengliedes 40 um die Drehachse 54 die Schwenkbewegungen der Kolben 14, 16, 18 und 20 aus der Umlaufbewegung des Kurvengliedes 40 abgeleitet werden.

Das Kurvenglied 40 ist in dem Gehäuse über zwei Ringlager 56 und 58 um die Drehachse 54 drehbar in dem Gehäuse 12 gelagert.

Die Kolben 14, 16, 18 und 20 laufen nicht um die Drehachse 54 um, sondern sind mit Ausnahme ihrer Schwenkbeweglichkeit statisch in dem Gehäuse 12 aufgenommen.

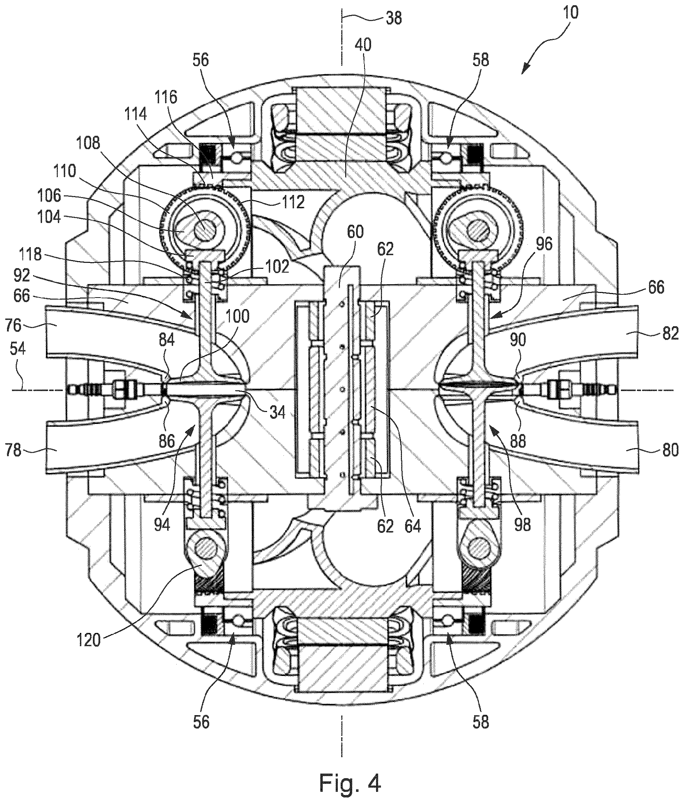

In Fig. 4 ist ein Lagerzapfen 60 gezeigt, an dem ein gabelförmiger Lagerabschnitt 62 des Paares aus den Kolben 16 und 20 sowie ein Lagerabschnitt 64 des Paares aus den Kolben 14 und 18 um die Schwenkachse 38 drehbar gelagert sind.

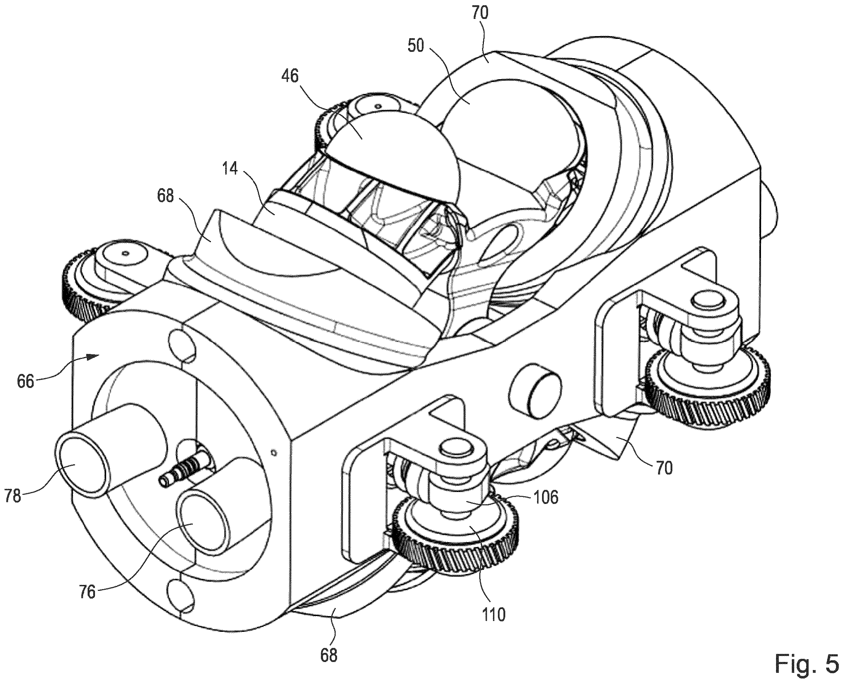

Die Kolben 14, 16, 18 und 20 sind in dem Gehäuse in einem Stator oder Kolbenkäfig 66 aufgenommen, der in Fig. 5 im aus dem Gehäuse 12 ausgebauten Zustand gezeigt ist. An dem Kolbenkäfig 66 ist eine zweiteilige Führungshülse 68 festgelegt, in der die Kolben 14 und 16 gleitend beweglich sind, und eine weitere zweiteilige Führungshülse 70 dient der Aufnahme der Kolben 18 und 20, wobei die Kolben 18 und 20 in der Führungshülse 70 gleitend beweglich sind. Gegenüber der Führungshülse 68 sind die Kolben 14 und 16 mittels O-Ring-Dichtungen abgedichtet, wie für eine Dichtungsanordnung 72 für den Kolben 14 in Fig. 2 gezeigt ist. Das Gleiche gilt für die Kolben 18 und 20 in der Führungshülse 70.

Mit Bezug auf Fig. 1 bis 4 sowie den weiteren Fig. 5 bis 8 werden weitere Einzelheiten der Schwenkkolbenmaschine 10, insbesondere ihre Gaswechselsteuerung und die geometrische Ausgestaltung der Endflächen 26, 28, 30, 32 der Kolben 14, 16, 18, 20 näher beschrieben.

Gemäß Fig. 4 weist die Schwenkkolbenmaschine 10 einen Einlass 76 zum Einlassen von Arbeitsmedium in die Arbeitskammer 34 und einen Auslass 78 zum Auslassen von Arbeitsmedium aus der Arbeitskammer 34 auf. Eingelassenes Arbeitsmedium kann insbesondere Frischluft sein, die mit einem Brennstoff gemischt sein kann. Ausgelassenes Arbeitsmedium kann verbranntes Brennstoff-Luftgemisch sein (Abgas). Ebenso ist der Arbeitskammer 36 ein Einlass 80 zum Einlassen von Arbeitsmedium in die Arbeitskammer 36 und ein Auslass 82 zum Auslassen von Arbeitsmedium aus der Arbeitskammer 36 zugeordnet. Wie aus Fig. 4 hervorgeht, ist die Anordnung des Einlasses 80 und des Auslasses 82 für die Arbeitskammer 36 um 180° umgekehrt zu der Anordnung des Einlasses 76 und des Auslasses 78 für die Arbeitskammer 34. Dies liegt darin begründet, dass die Abfolge der einzelnen Arbeitstakte des Einlassens, Verdichtens, Expandierens und Ausstoßens in der Arbeitskammer 36 um 180° gegenüber der Arbeitskammer 34 phasenverschoben stattfindet.

Gemäß Fig. 4 verlaufen die Ein- und Auslässe 76, 78, 80, 82 durch das Gehäuse 12 und durch den Stator bzw. Kolbenkäfig 66. Der Einlass 76 weist gemäß Fig. 4 und Fig. 1 eine Mündung 84 auf, die in der Arbeitskammer 34 angeordnet ist.

Von der Mündung 84 separiert weist der Auslasskanal 78 eine Mündung 86 auf, die ebenfalls in der Arbeitskammer 34 angeordnet ist. Die Mündung 86 ist in den Fig. 1 bis 3 nicht zu sehen, jedoch in Fig. 4. Die Mündungen 84 und 86 sind in der Arbeitskammer 34 voneinander beabstandet und einander gegenüberliegend angeordnet und befinden sich beide zwischen den Endflächen 26 und 28 der Kolben 14 und 16.

Der Einlass 80 weist eine Mündung 88 und der Auslass 82 eine Mündung 90 auf, die in der Arbeitskammer 36 zwischen den Endflächen 30 und 32 der Kolben 18 und 20 angeordnet sind. Auch die Mündungen 88 und 90 sind voneinander separiert und liegen in der Arbeitskammer 36 einander gegenüber.

In bevorzugter Einbaulage der Schwenkkolbenmaschine 10, beispielsweise in einem Fahrzeug, sind die Kolben 14, 16, 18, 20 horizontal liegend angeordnet, so dass die Öffnungsebenen der Mündungen 84, 86, 88, 90 horizontal liegen, wie beispielsweise in Fig. 4 gezeigt ist.

Dem Einlass 76 in die Arbeitskammer 34 ist ein Schließglied 92 zum Freigeben und Verschließen des Einlasses 76 zugeordnet. Dem Auslass 78 aus der Arbeitskammer 34 ist ein Schließglied 94 zum Verschließen und Freigeben des Auslasses 78 zugeordnet. Dem Einlass 80 ist ein Schließglied 98 zum Verschließen bzw. Freigeben des Einlasses 80 zugeordnet, und dem Auslass 82 ist ein Schließglied 96 zum Freigeben und Verschließen des Auslasses 82 zugeordnet.

Die Schließglieder 92, 94, 96 und 98 sind jeweils als Tulpenventil ausgebildet, das üblicherweise in Motoren verwendet wird.

Da die Schließglieder 92, 94, 96 und 98 identisch ausgebildet sein können und vorzugsweise sind, wird nachfolgend nur das Schließglied 92 und sein Antrieb weiter beschrieben. Die nachfolgende Beschreibung gilt somit auch für die Schließglieder 94, 96 und 98 und deren Antriebe.

Das Schließglied 92 weist einen Ventilteller 100 auf, der in der Mündung 84 des Einlasses 76 angeordnet ist und mit einem an der Mündung 84 ausgebildeten Ventilsitz dichtend zusammenwirkt. In Fig. 1 bis 3 ist eine Unterseite des Ventiltellers 100 sowie der Rand der Mündung 84 zu sehen. Wie aus Fig. 2 und 3 hervorgeht, erstreckt sich der Ventilteller parallel zur Schwenkebene der Kolben 14 und 16 bzw. senkrecht zur Schwenkachse 38.

An den Ventilteller 100 schließt sich ein Ventilantriebsschaft 102 an, der sich gemäß Fig. 4 parallel zur Schwenkachse 38 erstreckt. Der Ventilantriebsschaft 102 erstreckt sich dabei durch den Stator bzw. Kolbenkäfig 66 hindurch. An seinem vom Ventilteller 100 abgewandten Ende weist der Ventilantriebsschaft 102 einen Steuerkopf 104 auf, der mit einem Nocken 106 zusammenwirkt. Der Steuerkopf 104 bildet zusammen mit dem Ventilantriebsschaft einen Stößel. Der Nocken 106 ist über eine Nockenwelle 108 mit einem Zahnrad 110 verbunden. Das Zahnrad 110 weist eine Verzahnung 112 auf, die im Wesentlichen als Querverzahnung ausgebildet ist. Die Verzahnung 112 kämmt mit einer Verzahnung 114, die in der Ansicht in Fig. 2 und 3 besser zu sehen ist, eines Zahnrings 116, der an dem Kurvenglied 40 festgelegt ist. Die Verzahnung 114 des Zahnrings 116 ist im Wesentlichen als Längsverzahnung ausgebildet. Beim Umlaufen des Kurvengliedes 40 um die Drehachse 54 bewirkt der kämmende Eingriff des Zahnrings 116 mit dem Zahnrad 112 eine Drehung der Nockenwelle 108 und damit des Nockens 106, wodurch das Schließglied 92 je nach Drehstellung des Nockens 106 aus seiner Schließstellung in die Offenstellung überführt wird. Die Rückkehr des Schließgliedes 92 in seine Schließstellung wird durch eine Druckfeder 118 bewirkt, die sich einerseits am Stößel 102/104 und andererseits am Kolbenkäfig 66 abstützt. Die Bewegungsrichtung des Schließgliedes 92 beim Öffnen und Schließen ist parallel zu Schwenkachse 38.

Da bei einem vollen Umlauf des Kurvengliedes 40 um die Drehachse 54 entsprechend dem 4-Takt-Prinzip die vier Arbeitstakte des Einlassens, Verdichtens, Expandierens und Ausstoßens stattfinden sollen, ist die Zahl der Zähne der Verzahnung 114 gleich der Zahl der Zähne der Verzahnung 112.

Ein mit dem Schließglied 94 zusammenwirkender Nocken 120 ist gegenüber dem Nocken 106 um einen Winkel von 90° verdreht, wobei der Nocken 120 das Schließglied 94 zum Verschließen bzw. Freigeben des Auslasses 78 steuert. Im übrigen wird die Drehbewegung des Nockens 120 ebenfalls durch den Zahnring 116 am Kurvenglied erzeugt.

Um eine last- bzw. drehzahlabhängige Einstellung der Öffnungs- und Schließzeiten der Schließglieder 92 und 94 zu ermöglichen, ist die Winkellage des Nockens 106 relativ zur Verzahnung 112 des Zahnrades 110 ein- bzw. verstellbar, wobei das Gleiche für den Nocken 120 gilt, dessen Winkellage relativ zur Verzahnung des ihm zugeordneten Zahnrades ein- bzw. verstellbar ist. Die Einstellung der Winkellagen kann dabei auf rein mechanische Weise über ein Spiel, oder elektrisch-elektronisch erfolgen. Es können insbesondere Verstellmechanismen eingesetzt werden, wie sie im Motorenbau üblich sind.

Wie aus Fig. 5 hervorgeht, ist das Zahnrad 110 mit dem Nocken 106 am Kolbenkäfig 66 montiert. Das Gleiche gilt für die Zahnräder der Ventilantriebe für die Schließglieder 94, 96 und 98.

Fig. 4 zeigt die beiden Schließglieder 92 und 94 in ihrer beiderseitigen Schließstellung. In dieser beiderseitigen Schließstellung liegen die beiden Ventilteller der Schließglieder 92, 94 einander gegenüber und sind voneinander beabstandet, wobei der Abstand zwischen den einander zugewandten Seiten der beiden Ventilteller weniger als 1 cm, vorzugsweise maximal 5 mm beträgt. Bei maximal aufeinander zu bewegten Kolben 14 und 16 bildet der Raum zwischen den beiden Ventiltellern der Schließglieder 92 und 94 das minimale Volumen der Arbeitskammer 34.

In Fig. 4 ist des Weiteren beispielhaft das Schließglied 98 in seiner maximalen Offenstellung gezeigt, während das Schließglied 96 geschlossen ist. Die einzelnen Ventilstellungen werden später noch beschrieben.

Die Anordnung der Mündungen 84 und 86 in der Arbeitskammer 34 zwischen den Endflächen 26 und 28 der Kolben 14 und 16 ermöglicht es, wie nachfolgend beschrieben wird, den Endflächen 26 und 28 eine besonders vorteilhafte geometrische Form zu geben, wie nachfolgend beschrieben wird.

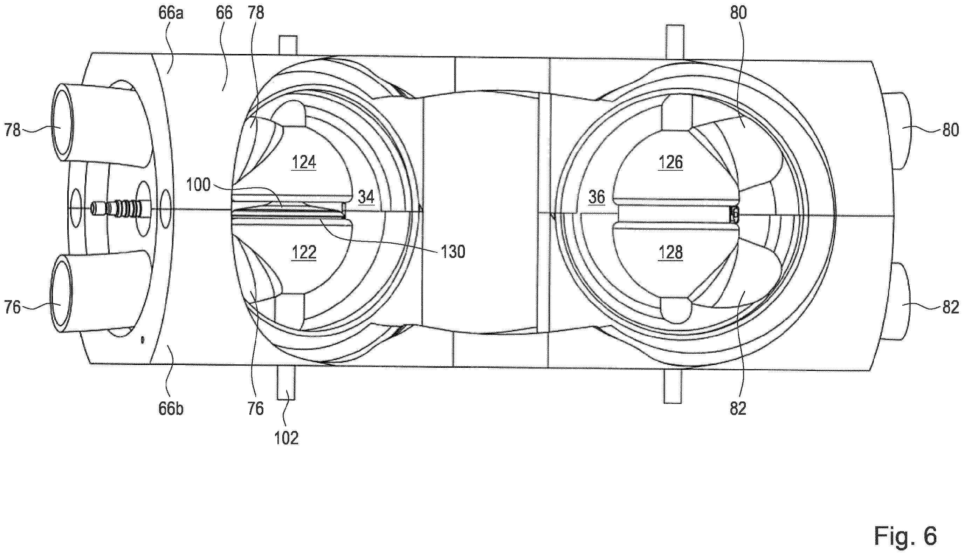

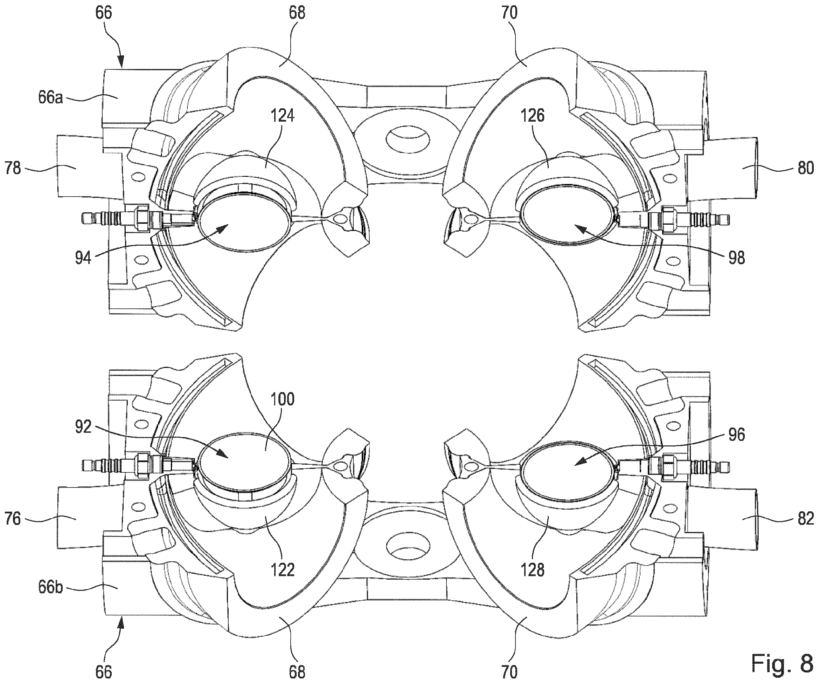

In Fig. 6 und 8 ist zunächst der Kolbenkäfig 66 ohne die Kolben 14, 16, 18 und 20 sowie ohne die Führungshülsen 68 und 70 gezeigt. Der Kolbenkäfig 66 ist aus zwei Hälften 66a und 66b zusammengesetzt, wobei Fig. 6 die Hälften 66a und 66b im miteinander verbundenen Zustand und Fig. 8 die Hälften 66a und 66b voneinander getrennt zeigt.

Wie insbesondere aus Fig. 6 hervorgeht, weist der Kolbenkäfig 66 außenseitig konvex geformte, glockenförmige Abschnitte 122, 124, 126 und 128 auf, wobei der glockenförmige Abschnitt 122 zu dem Einlass 76, der glockenförmige Abschnitt 124 zu dem Auslass 78, der glockenförmige Abschnitt 126 zu dem Einlass 80 und der glockenförmige Abschnitt 128 zu dem Auslass 82 gehört. Die glockenförmige Abschnitte 122, 124, 126 und 128 befinden sich dabei in der Arbeitskammer 34 bzw. in der Arbeitskammer 36. Die glockenförmigen Abschnitte 122, 124, 126, 128 sind vorzugsweise einstückig mit dem übrigen Körper des Kolbenkäfigs 66 ausgebildet. Des Weiteren können sie in ihren Wandungen Kühlmittelkanäle aufweisen, durch die Kühlmedium geleitet werden kann.

Eine Außenkontur der glockenförmigen Abschnitte 122, 124, 126, 128 ist im Wesentlichen halbkugelschalenförmig ausgebildet, so dass die beiden glockenförmigen Abschnitte 122, 124 zusammen im Wesentlichen eine Kugelschalenform ergeben, ebenso wie die beiden glockenförmigen Abschnitte 126 und 128.

Die arbeitskammerseitigen Öffnungen der glockenförmigen Abschnitte 122, 124, 126, 128, wie für eine Öffnung 130 des glockenförmigen Abschnitts 122 gezeigt, bilden dabei die Mündung des jeweiligen Einlasses bzw. Auslasses, wobei die Öffnung 130 die Mündung des Einlasses 76 in Fig. 6 bildet. Der Rand der Öffnung 130 bildet dabei den Ventilsitz für den Ventilteller 100 des Schließgliedes 92. Der Ventilantriebsschaft 102 erstreckt sich dabei ebenfalls durch den glockenförmigen Abschnitt 122.

In Fig. 8 sieht man in den jeweiligen Öffnungen der glockenförmigen Abschnitte 122, 124, 126, 128 die jeweiligen Ventilteller, wie für den Ventilteller 100 in der Öffnung des glockenförmigen Abschnitts 122 gezeigt. Die Ventilteller sind dabei zum Teil in Offenstellung gezeigt, wie der Ventilteller 100 bzw. der Ventilteller im glockenförmigen Abschnitt 124, während die Ventilteller im glockenförmigen Abschnitt 126, 128 in ihrer Schließstellung gezeigt sind.

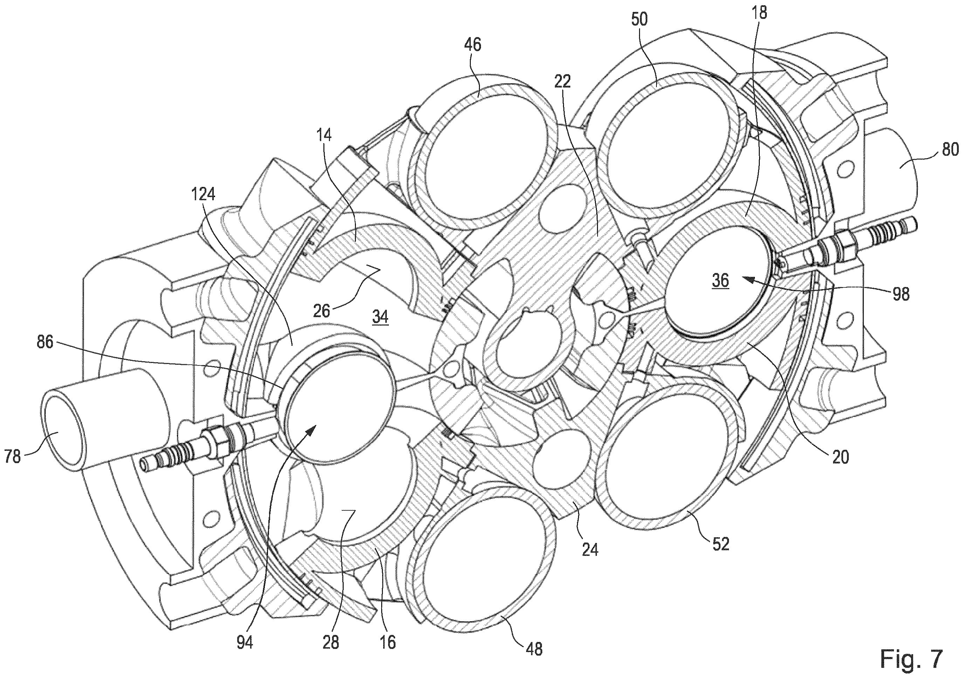

Wie am besten aus Fig. 7 hervorgeht, sind die Endflächen 26, 28 der Kolben 14, 16 konkav gewölbt und an die Außenkontur des glockenförmigen Abschnitts so angepasst, dass die Endflächen 26 und 28 den glockenförmigen Abschnitt 124 formpassend umschließen, wenn die Kolben 14 und 16 maximal aufeinander zu verschwenkt sind und die Arbeitskammer 34 entsprechend ihr minimales Volumen aufweist. Es versteht sich, dass die Kolben 14 und 16 in Fig. 7 entsprechend der Schnittdarstellung nur jeweils hälftig gezeigt sind, und dass auch der glockenförmige Abschnitt 122, der dem glockenförmigen Abschnitt 124 gemäß Fig. 6 gegenüberliegt, in Fig. 7 nicht gezeigt ist.

Für die Kolben 18 und 20 ist in Fig. 7 die maximal aufeinander zu verschwenkte Stellung (OT) gezeigt, in der deren Endflächen 30 und 32 den glockenförmigen Abschnitt 126 (und entsprechend den gegenüberliegenden glockenförmigen Abschnitt 128) formpassend umschließen. Außerdem sind die Endflächen 26, 28, 30, 32 auch an die jeweilige kreisförmige Umfangskontur der Ventilteller formgerecht angepasst.

Die Endflächen 26, 28 der Kolben 14, 16 (und das Gleiche gilt für die Endflächen 30, 32 der Kolben 16, 18) bilden zusammen somit ein hohlkugelschalenförmiges Gebilde, was den Vorteil hat, dass sich die Arbeitskammer 34 bzw. die Arbeitskammer 36 ausgehend von der OT-Stellung der Kolben (wie für die Kolben 18 und 20 in Fig. 7 gezeigt) hohlkugelförmig öffnet. Insbesondere bei den den Einlässen 76 und 80 zugeordneten Schließgliedern 92 und 98 bewirkt deren Öffnen zum Einlassen von Arbeitsmedium, insbesondere Frischgas, aufgrund der in den Arbeitskammern 34 und 36 vorgesehenen Anordnung der Mündungen 84 und 88 beim Öffnen der Schließglieder 92 und 98 einen zentralumfänglichen Eintritt des Arbeitsmediums durch den Ringspalt zwischen der jeweiligen Mündung 84, 88 und dem Ventilteller und eine in allen Richtungen der Arbeitskammern 34 und 36 gleichmäßige Verteilung und Ausbreitung des Arbeitsmediums. Beim Arbeitstakt des Expandierens nach dem Zünden eines Frischluft-Brennstoff-Gemisches ergibt die Geometrie der Endflächen 26, 28 bzw. 30, 32 eine ideale Brennkammer.

Die jeweilige Kontur der Endflächen 26, 28, 30 und 32 der Kolben 14, 16, 18 und 20 ist dabei auch an die Außenkontur des Umfangsrandes der Ventilteller der Schließglieder 92, 94, 96, 98 angepasst, so dass die Endflächen 26, 28 die Ventilteller der Schließglieder 92, 94 und die Endflächen 30 und 32 der Kolben 18 und 20 die Ventilteller der Schließglieder 96 und 98 formpassend umschließen, wenn die Arbeitskammer 34 bzw. 36 ihr minimales Volumen aufweist.

Aus Fig. 4 geht außerdem hervor, dass die Mündungen 84 und 86 des Einlasses 76 bzw. des Auslasses 78 und die Ventilteller der Schließglieder 92 und 94 in ihrer beiderseitigen Schließstellung symmetrisch bezüglich einer geometrischen Achse, die mittig durch die Arbeitskammer 34 und senkrecht zur Schwenkachse 38 verläuft, voneinander beabstandet in der Arbeitskammer 34 angeordnet sind, wobei diese geometrische Achse hier mit der Drehachse 54 zusammenfällt. Das gleiche gilt für die Mündungen 88 und 90 des Einlasses 80 und des Auslasses 82 in der Arbeitskammer 36.

Die Endflächen 26, 28 umschließen die glockenförmigen Abschnitte 122 und 124 in ihrer maximal aufeinander zu verschwenkten Stellung (OT-Stellung) mit einem Abstand von den glockenförmigen Abschnitten 122, 124 von vorzugsweise maximal 0,5 mm. Das Gleiche gilt für die Endflächen 30 und 32 der Kolben 18 und 20 in Bezug auf die glockenförmigen Abschnitte 126 und 128.

In der OT-Stellung der Kolben 14, 16 bzw. 18, 20 ist das minimale Volumen der Arbeitskammer 34 bzw. 36 durch den Raum zwischen den einander zugewandten Seiten der Ventilteller der Schließglieder 92, 94 bzw. 96, 98 definiert.

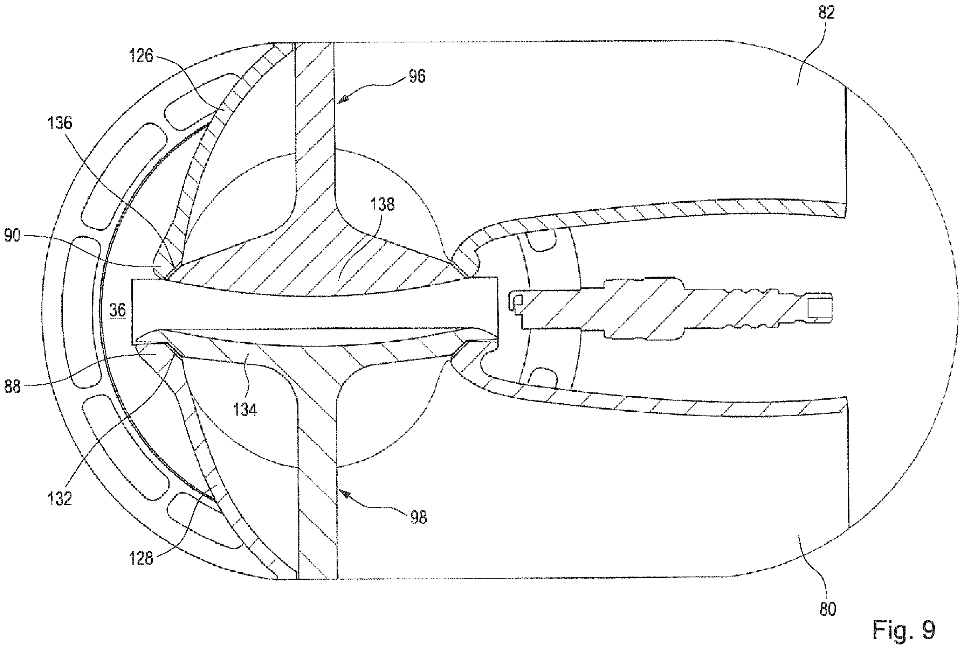

Mit Bezug auf Fig. 9 bis 12 wird nachfolgend die Gaswechselsteuerung der Schwenkkolbenmaschine 10 beschrieben. Die Beschreibung erfolgt dabei anhand der Schließglieder 96 und 98 in der Arbeitskammer 36, die dem Auslass 82 bzw. dem Einlass 80 zugeordnet sind. In Fig. 9 bis 12 ist der an der Mündung 88 des Einlasses 80 vorhandene Ventilsitz 132 für den Ventilteller 134 des Schließglieds 98 detaillierter dargestellt, ebenso der Ventilsitz 136 an der Mündung 90 des Auslasses 82, mit dem der Ventilteller 138 zusammenwirkt.

Aus Fig. 9 geht des Weiteren hervor, dass der Ventilteller 138 des Schließgliedes 96 für den Auslass 82 geringfügig konvex gewölbt ist, während der Ventilteller 134 des Schließgliedes 98 für den Einlass 80 geringfügig konkav gewölbt ist.

Fig. 9 zeigt die Schließglieder 96 und 98 in ihrer beiderseitigen Schließstellung, in der sowohl der Einlass 80 als auch der Auslass 82 verschlossen sind.

Der beiderseitige Schließzustand der Schließglieder 96 und 98 gemäß Fig. 9 wird beispielsweise während des Arbeitstaktes des Expandierens (Arbeitens) oder Verdichtens eingenommen.

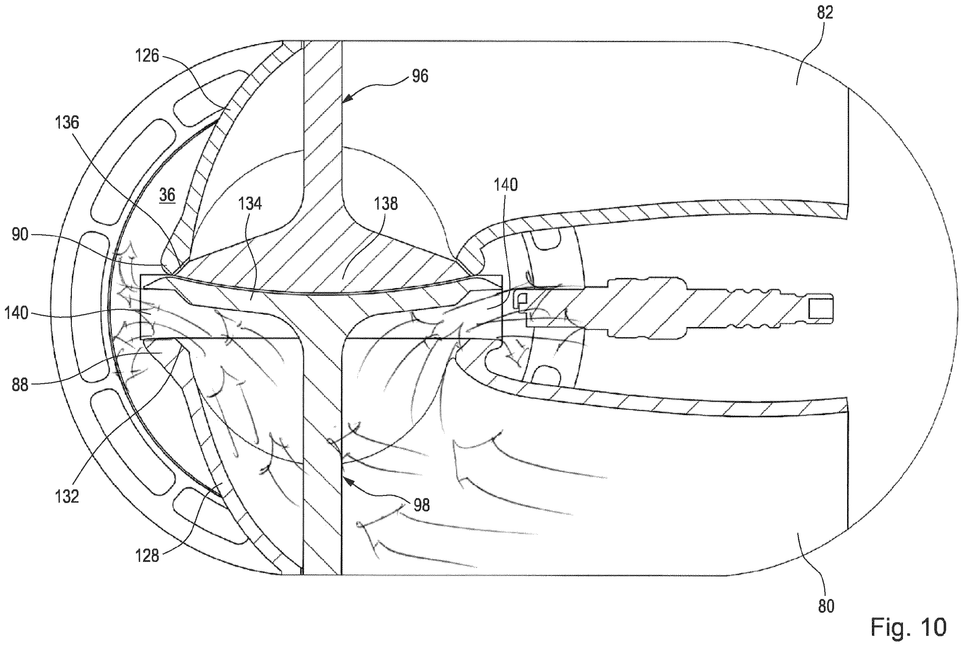

Fig. 10 zeigt die Gaswechselsteuerung in einem Betriebszustand, in dem das Schließglied 98 vollständig geöffnet ist, während das Schließglied 96 geschlossen ist. Über den Ringspalt 140 zwischen dem Ventilteller 134 und der Mündung 88 des Einlasses 80 kann nun Arbeitsmedium, beispielsweise Frischluft, in die Arbeitskammer 36 einströmen (wie mit Strömungspfeilen angedeutet ist) und sich besonders gleichmäßig in der Arbeitskammer 36 verteilen und ausbreiten, da sich der Ringspalt 140 zentral-umfänglich in der Arbeitskammer 36 öffnet. Die Wegstrecken des eingelassenen Arbeitsmediums sind dabei in allen Richtungen der Strömung etwa gleich lang.

In der oben bereits erwähnten bevorzugten Einbaulage der Schwenkkolbenmaschine 10, in der die Kolben 14, 16, 18, 20 liegend angeordnet sind, d.h. die Schwenkachse 38 vertikal verläuft, strömt das Arbeitsmedium im Wesentlichen horizontal durch den Ringspalt 140 in die Arbeitskammer 36 ein, was durch die Formgebung des Randes des Ventiltellers 134 wie in Fig. 10 dargestellt begünstigt wird.

Der Gaswechselzustand gemäß Fig. 10 wird beim Arbeitstakt des Einlassens, beispielsweise von Frischluft (mit oder ohne Brennstoff) eingenommen.

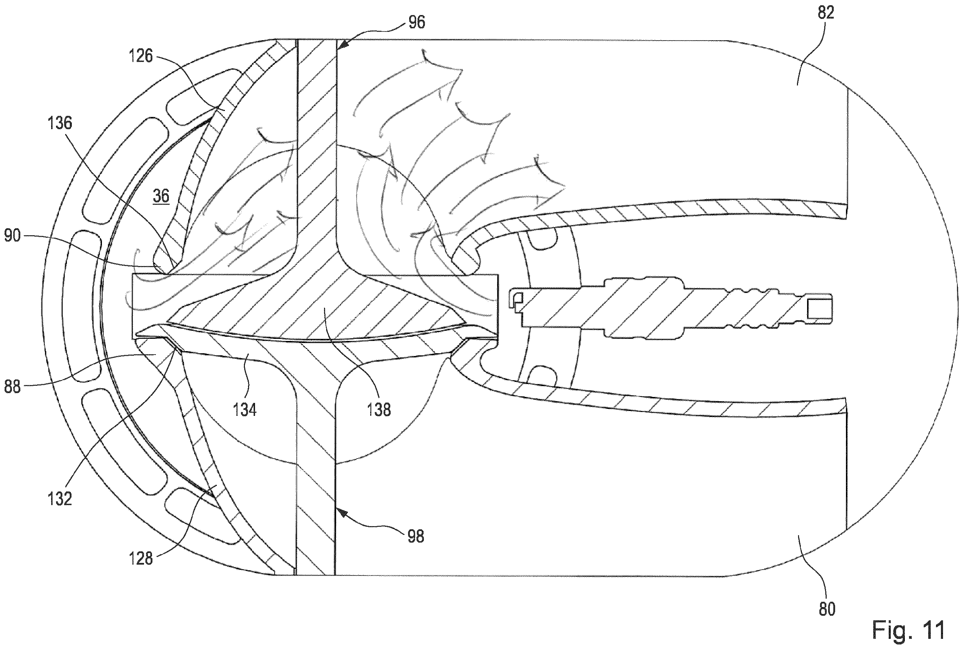

Fig. 11 zeigt einen Betriebszustand der Gaswechselsteuerung, bei dem das Schließglied 96 vollständig geöffnet ist, während das Schließglied 98 geschlossen ist. Dieser Gaswechselzustand wird beim Arbeitstakt des Auslassens bzw. Ausstoßens von verbranntem Verbrennungsgemisch eingenommen. Verbranntes Verbrennungsgemisch wird über den Ringspalt 140 besonders rasch abgeführt und entsprechend die Arbeitskammer 36 sehr rasch und vollständig entleert.

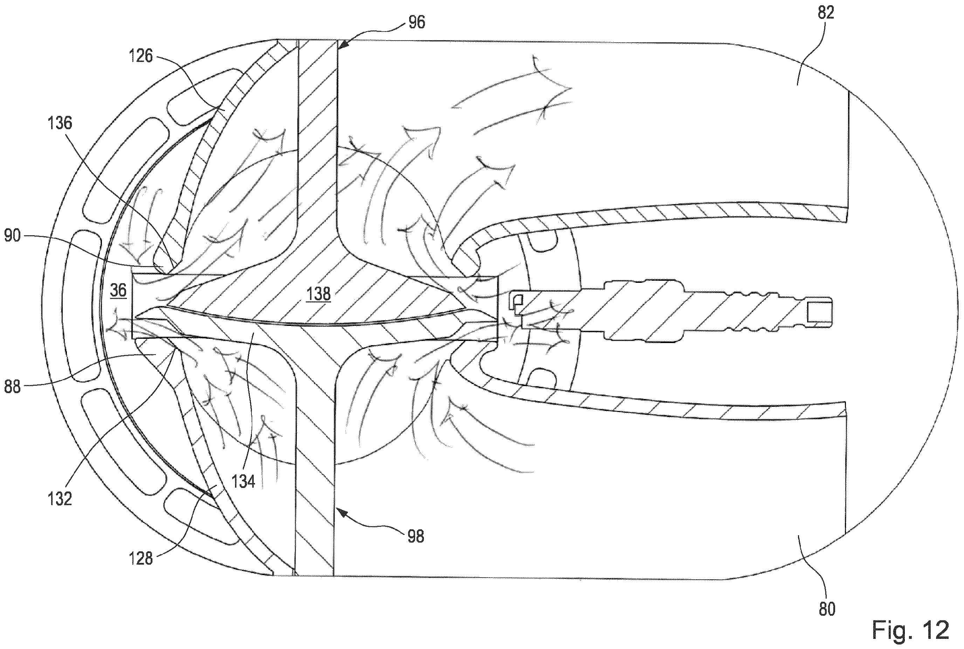

Fig. 12 zeigt einen Betriebszustand der Gaswechselsteuerung, bei dem sowohl das Schließglied 96 als auch das Schließglied 98 teilweise geöffnet sind. Dieser Betriebszustand der Gaswechselsteuerung wird auch als Überschneidung bezeichnet. Mittels der Überschneidung kann beispielsweise eine innere Abgasrückführung erreicht werden, die als temperatursenkende Maßnahme zur Stickoxid-Senkung nützlich ist. Des Weiteren kann eine Überschneidung der Öffnung des Einlasses 80 und des Auslasses 82, dass das ausströmende Abgas das über den Einlass 80 einströmende Frischgas mitreißt und die Arbeitskammer somit gründlich gespült wird. Dadurch befindet sich in der Folge mehr Frischgas in der Arbeitskammer 36, wodurch ein höheres Drehmoment und eine höhere Leistung erzielt werden können.

Gemäß weiteren Aspekten der Schwenkkolbenmaschine 10 weist diese den Arbeitskammern 34 und 36 zugeordnete Zündmittel, beispielsweise in Form von Zündkerzen 150 und 152, auf. Außerdem sind nicht näher dargestellte Einspritzmittel für Brennstoff, beispielsweise in die Einlässe 76 und 80 mündend, vorhanden.

Während oben beschrieben wurde, dass beide Arbeitskammern 34 und 36 als Brennräume genutzt werden, ist es ebenso möglich, dass beispielsweise nur die Arbeitskammer 34 als Brennraum genutzt wird, während die Arbeitskammer 36 als Kompressor zum Verdichten von Luft genutzt wird. In diesem Fall können die Zündmittel an der Arbeitskammer 36 entfallen. Die in dem Kompressor (Arbeitskammer 36) verdichtete Luft kann beispielsweise der Arbeitskammer 34 zugeführt werden, so dass die Schwenkkolbenmaschine 10 eine Aufladung wie bei einem Turbo erfährt.

Wie bereits oben erwähnt, ist die Schwenkkolbenmaschine 10 vorzugsweise mit einem elektromotorischen Teil ausgestattet, der in Fig. 3 mit dem allgemeinen Bezugszeichen 160 versehen ist. Der elektromotorische Teil 160 weist dabei einen Rotor 162 mit einer Wicklung auf, der mit dem Kurvenglied 40 fest verbunden ist. Des Weiteren weist der elektromotorische Teil 160 einen Stator 164 auf, der fest mit dem Gehäuse 12 verbunden ist und beim Umlaufen des Rotors 162 um die Drehachse 54 mit dem Rotor 162 zusammenwirkt. Der elektromotorische Teil kann dabei als Elektromotor, d.h. als Elektroantrieb anstelle der oder zusätzlich zu der durch den verbrennungsmotorischen Teil der Schwenkkolbenmaschine 10 bereitgestellten Antriebsenergie dienen oder als Generator zum Bereitstellen elektrischer Energie, beispielsweise um die Fahrzeugbatterie zu laden.

## Patentansprüche

1. Schwenkkolbenmaschine, mit einem Gehäuse (12), in dem ein erster Kolben (14, 18) und ein zweiter Kolben (16, 20) angeordnet sind, die um eine Schwenkachse (38) voneinander weg und aufeinander zu verschwenkbar sind, wobei der erste Kolben (14, 18) eine erste Endfläche (26, 30) und der zweite Kolben (16, 20) eine zweite Endfläche (28, 32) aufweist, wobei zwischen der ersten Endfläche (26, 30) und der zweiten Endfläche (28, 32) eine Arbeitskammer (34, 36) für ein Arbeitsmedium angeordnet ist, die sich beim Verschwenken des ersten Kolbens (14, 18) und des zweiten Kolbens (16, 20) abwechselnd verkleinert und vergrößert, wobei in die Arbeitskammer (34, 36) ein Einlass (76, 80) zum Einlassen von Arbeitsmedium in die Arbeitskammer (34, 36) und ein Auslass (78, 82) zum Auslassen von Arbeitsmedium aus der Arbeitskammer (34, 36) mündet, und mit einem Schließglied (92, 94, 96, 98) zum Verschließen und Freigeben zumindest des Einlasses (76, 80) oder zumindest des Auslasses (78, 82), wobei das Schließglied (92, 94, 96, 98) einen Ventilteller (100, 134, 138) aufweist, der mit einem Ventilsitz (132, 136) zusammenwirkt, **dadurch gekennzeichnet, dass** eine Mündung (84, 86, 88, 90) zumindest des Einlasses (76, 80) oder zumindest des Auslasses (78, 82) in der Arbeitskammer (34, 36) zwischen der ersten Endfläche (26, 30) und der zweiten Endfläche (28, 32) angeordnet ist, und dass der Ventilsitz (132, 136) und der Ventilteller (100, 134, 138) an der Mündung (84, 86, 88, 90) angeordnet sind.

2. Schwenkkolbenmaschine nach Anspruch 1, **dadurch gekennzeichnet, dass** sich der Ventilteller (100, 134, 138) parallel zu einer Schwenkebene des ersten und zweiten Kolbens (14, 16, 18, 20) erstreckt.

3. Schwenkkolbenmaschine nach Anspruch 1 oder 2, **dadurch gekennzeichnet, dass** der Ventilteller (100, 134, 138) zum Verschließen und Freigeben der Mündung (84, 86, 88, 90) parallel zur Schwenkachse (38) beweglich ist.

4. Schwenkkolbenmaschine nach einem der Ansprüche 1 bis 3, **dadurch gekennzeichnet, dass** eine jeweilige Kontur der ersten und zweiten Endfläche (26, 28, 30, 32) an eine Außenkontur eines Umfangsrandes des Ventiltellers (100, 134, 138) angepasst ist, so dass die erste und die zweite Endfläche (26, 28, 30, 32) den Ventilteller (100, 134, 138) formpassend umschließen, wenn die Arbeitskammer (34, 36) ihr minimales Volumen aufweist.

5. Schwenkkolbenmaschine nach einem der Ansprüche 1 bis 4, **dadurch gekennzeichnet, dass** der erste Kolben (14, 18) und der zweite Kolben (16, 20) in einem in dem Gehäuse (12) angeordneten Kolbenkäfig (66) angeordnet sind, wobei der Kolbenkäfig (66) einen glockenförmigen Abschnitt (122, 124, 126, 128) aufweist, dessen arbeitskammerseitige Öffnung die Mündung (84, 86, 88, 90) des Einlasses (76, 80) oder des Auslasses (78, 82) bildet.

6. Schwenkkolbenmaschine nach Anspruch 5, **dadurch gekennzeichnet, dass** die erste Endfläche (26, 30) und die zweite Endfläche (28, 32) konkav gewölbt und an eine Außenkontur des glockenförmigen Abschnittes (122, 124, 126, 128) angepasst sind, so dass die erste und die zweite Endfläche (26, 28, 30, 32) den glockenförmigen Abschnitt (122, 124, 126, 128) formpassend umschließen, wenn die Arbeitskammer (34, 36) ihr minimales Volumen aufweist.

7. Schwenkkolbenmaschine nach einem der Ansprüche 1 bis 6, **dadurch gekennzeichnet, dass** die Mündung (84, 86, 88, 90) eine erste Mündung (84, 88) des Einlasses (76, 80), das Schließglied (92, 94, 96, 98) ein erstes Schließglied (92, 98) zum Verschließen und Freigeben der ersten Mündung (84, 88), der Ventilteller (100, 134, 138) ein erster Ventilteller (100, 134) und der Ventilsitz (132, 136) ein erster Ventilsitz (132) ist, und dass ein zweites Schließglied (94, 96) zum Verschließen und Freigeben einer zweiten Mündung (86, 90) des Auslasses (78, 82) vorhanden ist, die zwischen der ersten Endfläche (26, 30) und der zweiten Endfläche (28, 32) angeordnet ist, wobei das zweite Schließglied (94, 96) einen zweiten Ventilteller (138) aufweist, der mit einem zweiten Ventilsitz (136) an der zweiten Mündung (86, 90) zusammenwirkt, wobei der zweite Ventilteller (138) dem ersten Ventilteller (100, 134) gegenüberliegend angeordnet ist.

8. Schwenkkolbenmaschine nach Anspruch 7, **dadurch gekennzeichnet, dass** der erste Ventilteller (100, 134) und der zweite Ventilteller (136) in ihrer beiderseitigen Schließstellung symmetrisch bezüglich einer geometrischen Achse, die mittig durch die Arbeitskammer (34, 36) und senkrecht zur Schwenkachse (38) verläuft, voneinander beabstandet angeordnet sind.

9. Schwenkkolbenmaschine nach Anspruch 8, **dadurch gekennzeichnet, dass** ein Abstand des ersten Ventiltellers (100, 134) von dem zweiten Ventilteller (138) in der beiderseitigen Schließstellung weniger als etwa 1 cm, vorzugsweise weniger als etwa 0,8 cm, weiter vorzugsweise von etwa 0,5 cm beträgt.

10. Schwenkkolbenmaschine nach einem der Ansprüche 1 bis 9, **dadurch gekennzeichnet, dass** in dem Gehäuse (12) ein ringförmiges Kurvenglied (40) angeordnet ist, das eine Steuerkurve (42, 44) aufweist, wobei das Kurvenglied (40) in dem Gehäuse (12) um eine Drehachse (54) umlaufen kann, die senkrecht zur Schwenkachse (38) verläuft, wobei der erste Kolben (14, 18) und der zweite Kolben (16, 20) jeweils ein Lauforgan (46, 48, 50, 52) aufweisen, die entlang der Steuerkurve (42, 44) geführt sind, um die Schwenkbewegung des ersten und zweiten Kolbens (14, 16, 18, 20) aus der Umlaufbewegung des Kurvengliedes (40) abzuleiten.

11. Schwenkkolbenmaschine nach Anspruch 10, **gekennzeichnet durch** eine Ventilsteuerung zum Steuern des Schließgliedes (92, 94, 96, 98), die als Nockensteuerung mit einem drehbaren Nocken (106, 120) ausgebildet ist, der mit einem mit dem Ventilteller (100, 134, 138) verbundenen Stößel (102/104) zusammenwirkt, wobei der Nocken (106, 120) von dem Kurvenglied (40) angetrieben wird.

12. Schwenkkolbenmaschine nach Anspruch 11, **dadurch gekennzeichnet, dass** das Kurvenglied (40) einen mit einer ersten Verzahnung (114) versehenen Zahnring (116) aufweist, und dass der Nocken (106, 120) ein mit einer zweiten Verzahnung (112) versehenes Zahnrad (110) aufweist, wobei die erste Verzahnung (114) mit der zweiten Verzahnung (112) kämmend in Eingriff steht.

13. Schwenkkolbenmaschine nach Anspruch 10 oder 11, **dadurch gekennzeichnet, dass** die Ventilsteuerung verstellbar ist, um einen Schließzeitpunkt und/oder Freigabezeitpunkt und/oder einen Hub des Schließgliedes (92, 94, 96, 98) last- und/oder drehzahlabhängig einzustellen.

14. Schwenkkolbenmaschine nach Anspruch 13, **dadurch gekennzeichnet, dass** eine Winkellage des Nockens (106, 120) relativ zu dem Zahnrad (110) verstellbar ist.

## Claims

1. A pivoting piston machine, comprising a housing (12) in which a first piston (14, 18) and a second piston (16, 20) are arranged, which are pivotable away from one another and toward one another about a pivot axis (38), wherein the first piston (14, 18) has a first end surface (26, 30) and the second piston (16, 20) has a second end surface (28, 32), wherein a working chamber (34, 36) for a working medium is arranged between the first end surface (26, 30) and the second end surface (28, 32), which working chamber increases and decreases in size in alternating fashion during the pivoting of the first piston (14, 18) and of the second piston (16, 20), wherein an inlet (76, 80) for the admission of working medium into the working chamber (34, 36), and an outlet (78, 82) for the discharge of working medium out of the working chamber (34, 36), open into the working chamber (34, 36), and further comprising a closing element (92, 94, 96, 98) for closing and opening up at least the inlet (76, 80) or at least the outlet (78, 82), wherein the closing element (92, 94, 96, 98) has a valve disk (100, 134, 138) which interacts with a valve seat (132, 136), **characterized in that** a mouth (84, 86, 88, 90) at least of the inlet (76, 80) or at least of the outlet (78, 82) is arranged in the working chamber (34, 36) between the first end surface (26, 30) and the second end surface (28, 32), and **in that** the valve seat (132, 136) and the valve disk (100, 134, 138) are arranged at the mouth (84, 86, 88, 90).

2. The pivoting piston machine as claimed in claim 1, **characterized in that** the valve disk (100, 134, 138) extends parallel to a pivot plane of the first and second piston (14, 16, 18, 20).

3. The pivoting piston machine as claimed in claim 1 or 2, **characterized in that** the valve disk (100, 134, 138) is movable parallel to the pivot axis (38) for the closing and opening-up of the mouth (84, 86, 88, 90).

4. The pivoting piston machine as claimed in any one of claims 1 to 3, **characterized in that** a respective contour of the first and second end surfaces (26, 28, 30, 32) is adapted to an outer contour of a circumferential edge of the valve disk (100, 134, 138) such that the first and the second end surfaces (26, 28, 30, 32) surround the valve disk (100, 134, 138) in a form-fitting manner when the working chamber (34, 36) has its minimum volume.

5. The pivoting piston machine as claimed in any one of claims 1 to 4, **characterized in that** the first piston (14, 18) and the second piston (16, 20) are arranged in a piston cage (66) which is arranged in the housing (12), wherein the piston cage (66) has a bell-shaped section (122, 124, 126, 128), a working-chamber-side opening of which forms the mouth (84, 86, 88, 90) of the inlet (76, 80) or of the outlet (78, 82).

6. The pivoting piston machine as claimed in claim 5, **characterized in that** the first end surface (26, 30) and the second end surface (28, 32) are concavely curved and are adapted to an outer contour of the bell-shaped section (122, 124, 126, 128), such that the first and the second end surface (26, 28, 30, 32) surround the bell-shaped section (122, 124, 126, 128) in a form-fitting manner when the working chamber (34, 36) has its minimum volume.

7. The pivoting piston machine as claimed in any one of claims 1 to 6, **characterized in that** the mouth (84, 86, 88, 90) is a first mouth (84, 88) of the inlet (76, 80), the closing element (92, 94, 96, 98) is a first closing element (92, 98) for closing and opening up the first mouth (84, 88), the valve disk (100, 134, 138) is a first valve disk (100, 134), and the valve seat (132, 136) is a first valve seat (132), and **in that** a second closing element (94, 96) is provided for closing and opening up a second mouth (86, 90) of the outlet (78, 82), which second mouth is arranged between the first end surface (26, 30) and the second end surface (28, 32), wherein the second closing element (94, 96) has a second valve disk (138) which interacts with a second valve seat (136) at the second mouth (86, 90), wherein the second valve disk (138) is arranged so as to be situated opposite the first valve disk (100, 134).

8. The pivoting piston machine as claimed in claim 7, **characterized in that** the first valve disk (100, 134) and the second valve disk (136) are, in their mutual closed position, arranged spaced apart from one another symmetrically with respect to a geometric axis which runs centrally through the working chamber (34, 36) and perpendicular to the pivot axis (38).

9. The pivoting piston machine as claimed in claim 8, **characterized in that** a spacing of the first valve disk (100, 134) from the second valve disk (138) in the mutual closed position amounts to less than approximately 1 cm, preferably less than approximately 0.8 cm, and more preferably amounts to approximately 0.5 cm.

10. The pivoting piston machine as claimed in any one of claims 1 to 9, **characterized in that**, in the housing (12), there is arranged a ring-shaped curve element (40) which has a control curve (42, 44), wherein the curve element (40) can revolve in the housing (12) about an axis of rotation (54) which runs perpendicular to the pivot axis (38), wherein the first piston (14, 18) and the second piston (16, 20) have in each case one running member (46, 48, 50, 52), which running members are guided along the control curve (42, 44) in order to derive the pivoting movement of the first and second piston (14, 16, 18, 20) from the revolving movement of the curve element (40).

11. The pivoting piston machine as claimed in claim 10, **characterized by** a valve controller for controlling the closing element (92, 94, 96, 98), which valve controller is formed as a cam-type controller with a rotatable cam (106, 120) which interacts with a plunger (102/104) connected to the valve disk (100, 134, 138), wherein the cam (106, 120) is driven by the curve element (40).

12. The pivoting piston machine as claimed in claim 11, **characterized in that** the curve element (40) has a toothed ring (116) equipped with a first toothing (114), and **in that** the cam (106, 120) has a toothed wheel (110) equipped with a second toothing (112), wherein the first toothing (114) is in meshing engagement with the second toothing (112).

13. The pivoting piston machine as claimed in claim 10 or 11, **characterized in that** the valve controller is adjustable for the purposes of setting a closing time and/or an opening-up time and/or a stroke of the closing element (92, 94, 96, 98) in a manner dependent on load and/or rotational speed.

14. The pivoting piston machine as claimed in claim 13, **characterized in that** an angular position of the cam (106, 120) relative to the toothed wheel (110) is adjustable.

## Revendications

1. Machine à pistons oscillants avec un boîtier (12) dans lequel un premier piston (14, 18) et un second piston (16, 20) sont disposés, lesquels peuvent pivoter autour d'un axe de pivotement (38) en s'éloignant et se rapprochant l'un de l'autre, dans laquelle le premier piston (14, 18) présente une première surface d'extrémité (26, 30) et le second piston (16, 20) présente une seconde surface d'extrémité (28, 32), dans laquelle une chambre de travail (34, 36) pour un fluide de travail est disposée entre la première surface d'extrémité (26, 30) et la seconde surface d'extrémité (28, 32), laquelle se réduit et s'agrandit alternativement lors du pivotement du premier piston (14, 18) et du second piston (16, 20), dans laquelle une entrée (76, 80) pour l'entrée de fluide de travail dans la chambre de travail (34, 36) et une sortie (78, 82) pour la sortie de fluide de travail de la chambre de travail (34, 36) débouche dans la chambre de travail (34, 36), et avec un organe de fermeture (92, 94, 96, 98) pour la fermeture et la libération au moins de l'entrée (76, 80) ou au moins de la sortie (78, 82), dans laquelle l'organe de fermeture (92, 94, 96, 98) présente un disque de soupape (100, 134, 138) qui coopère avec un siège de soupape (132, 136), **caractérisée en ce qu'**une bouche (84, 86, 88, 90) au moins de l'entrée (76, 80) ou au moins de la sortie (78, 82) est disposée dans la chambre de travail (34, 36) entre la première surface d'extrémité (26, 30) et la seconde surface d'extrémité (28, 32), et que le siège de soupape (132, 136) et le disque de soupape (100, 134, 138) sont disposés au niveau de la bouche (84, 86, 88, 90).

2. Machine à pistons oscillants selon la revendication 1, **caractérisée en ce que** le disque de soupape (100, 134, 138) s'étend parallèlement à un plan de pivotement du premier et du second piston (14, 16, 18, 20).

3. Machine à pistons oscillants selon la revendication 1 ou 2, **caractérisée en ce que** le disque de soupape (100, 134, 138) est mobile pour la fermeture et la libération de la bouche (84, 86, 88, 90) parallèlement à l'axe de pivotement (38).

4. Machine à pistons oscillants selon l'une quelconque des revendications 1 à 3, **caractérisée en ce qu'**un contour respectif de la première et la seconde surface d'extrémité (26, 28, 30, 32) est adapté à un contour extérieur d'un bord périphérique du disque de soupape (100, 134, 138) de sorte que la première et la seconde surface d'extrémité (26, 28, 30, 32) entourent de manière adaptée à la forme le disque de soupape (100, 134, 138) lorsque la chambre de travail (34, 36) présente son volume minimal.

5. Machine à pistons oscillants selon l'une quelconque des revendications 1 à 4, **caractérisée en ce que** le premier piston (14, 18) et le second piston (16, 20) sont disposés dans une cage de piston (66) disposée dans le boîtier (12), dans laquelle la cage de piston (66) présente une section en forme de cloche (122, 124, 126, 128) dont l'ouverture côté chambre de travail forme la bouche (84, 86, 88, 90) de l'entrée (76, 80) ou de la sortie (78, 82).

6. Machine à pistons oscillants selon la revendication 5, **caractérisée en ce que** la première surface d'extrémité (26, 30) et la seconde surface d'extrémité (28, 32) sont courbées de manière concave et adaptées à un contour extérieur de la section en forme de cloche (122, 124, 126, 128) de sorte que la première et la seconde surface d'extrémité (26, 28, 30, 32) entourent de manière adaptée à la forme la section en forme de cloche (122, 124, 126, 128) lorsque la chambre de travail (34, 36) présente son volume minimal.

7. Machine à pistons oscillants selon l'une quelconque des revendications 1 à 6, **caractérisée en ce que** la bouche (84, 86, 88, 90) est une première bouche (84, 88) de l'entrée (76, 80), l'organe de fermeture (92, 94, 96, 98) un premier organe de fermeture (92, 98) pour la fermeture et la libération de la première bouche (84, 88), le disque de soupape (100, 134, 138) un premier disque de soupape (100, 134) et le siège de soupape (132, 136) un premier siège de soupape (132), et qu'un second organe de fermeture (94, 96) est présent pour la fermeture et la libération d'une seconde bouche (86, 90) de la sortie (78, 82), qui est disposée entre la première surface d'extrémité (26, 30) et la seconde surface d'extrémité (28, 32), dans laquelle le second organe de fermeture (94, 96) présente un second disque de soupape (138) qui coopère avec un second siège de soupape (136) au niveau de la seconde bouche (86, 90), dans laquelle le second disque de soupape (138) est disposé à l'opposé du premier disque de soupape (100, 134).

8. Machine à pistons oscillants selon la revendication 7, **caractérisée en ce que** le premier disque de soupape (100, 134) et le second disque de soupape (136) sont disposés à distance l'un de l'autre dans leur position de fermeture des deux côtés de manière symétrique par rapport à un axe géométrique qui s'étend au milieu au travers de la chambre de travail (34, 36) et perpendiculairement à l'axe de pivotement (38).

9. Machine à pistons oscillants selon la revendication 8, **caractérisée en ce qu'**une distance entre le premier disque de soupape (100, 134) et le second disque de soupape (138) dans la position de fermeture des deux côtés est inférieure à environ 1 cm, de préférence inférieure à environ 0,8 cm, de manière davantage préférée d'environ 0,5 cm.

10. Machine à pistons oscillants selon l'une quelconque des revendications 1 à 9, **caractérisée en ce qu'**un organe de came (40) annulaire est disposé dans le boîtier (12), lequel présente une came de commande (42, 44), dans laquelle l'organe de came (40) peut tourner dans le boîtier (12) autour d'un axe de rotation (54) qui s'étend perpendiculairement à l'axe de pivotement (38), dans laquelle le premier piston (14, 18) et le second piston (16, 20) présentent respectivement un organe de roulement (46, 48, 50, 52) qui est guidé le long de la courbe de commande (42, 44) afin de dériver le mouvement de pivotement du premier et du second piston (14, 16, 18, 20) du mouvement de rotation de l'organe de came (40).

11. Machine à pistons oscillants selon la revendication 10, **caractérisée par** une commande de soupape pour la commande de l'organe de fermeture (92, 94, 96, 98), qui est réalisée en tant que commande de came avec une came rotative (106, 120) qui coopère avec un poussoir (102/104) raccordé au disque de soupape (100, 134, 138), dans laquelle la came (106, 120) est entraînée par l'organe de came (40).

12. Machine à pistons oscillants selon la revendication 11, **caractérisée en ce que** l'organe de came (40) présente un anneau denté (116) pourvu d'une première denture (114), et que la came (106, 120) présente une roue dentée (110) pourvue d'une seconde denture (112), dans laquelle la première denture (114) est en prise par engrènement avec la seconde denture (112).

13. Machine à pistons oscillants selon la revendication 10 ou 11, **caractérisée en ce que** la commande de soupape est réglable afin de régler en fonction de la charge et/ou de la vitesse de rotation un moment de fermeture et/ou un moment de libération et/ou une course de l'organe de fermeture (92, 94, 96, 98).

14. Machine à pistons oscillants selon la revendication 13, **caractérisée en ce qu'**une position angulaire de la came (106, 120) est réglable par rapport à la roue dentée (110).
